# FASCICULE DE BREVET EUROPEEN

(11) **EP 0 410 251 B1**
(45) Date de publication et mention de la délivrance du brevet: **05.04.1995**
(21) Numéro de dépôt: 90113553.3
(22) Date de dépôt: 16.07.1990
(51) Int. Cl.: H04Q 7/24, H04B 7/26

(54) **Réseau d'accès pour service de téléphonie sans fil**
Zugangsnetzwerk für drahtlosen Telefondienst
Access network for wireless telephone service

(30) Priorité: 17.07.1989 FR 8909578
(43) Date de publication de la demande: 30.01.1991
(73) Titulaire: ALCATEL CIT, 75008 Paris (FR)
(72) Inventeur: Martin, Maurice, 2, Rue Louis de Broglie F-22304 Lannion (FR); Kerihuel, Jean-Bernard, F-75015 Paris (FR); Pennanec'h, Jean-Claude, F-75014 Paris (FR)
(74) Mandataire: Weinmiller, Jürgen

(56) Documents cités:
- EP-A- 0 212 761
- COMMUTATION & TRANSMISSION no. 2, 1989,Paris (FR) pages 5 - 22; J.DUNOGUE et al: "Du Concept à l'Application du Réseau Intelligent. Architecture et Equipements d'Alcatel"
- 8th European Conference on Electrotechnics juin 88, Stockholm (SE) pages 379 -382; H.OCHSNER: "Cordless Telecommunications: Towards a Digital Standard"
- 8th European Conference on Electrotechnics juin 88, Stockholm (SE) pages 470 -473; S.HANSEN et al: "The GSM Base Station System and the related Equipment"
- COMMUTATION & TRANSMISSION no. 4, 88,Paris (FR) pages 17 - 30; M.BALLARD et al: "ECR 900. La Radiotéléphonie Numérique Européenne d'Alcatel"
- 38th IEEE VEHICULAR TECHNOLOGY CONFERENCE juin 88, Philadelphia (US) pages 30 -37; W.FUHRMANN et al: "Radio Access Protocol of the new GSM Land Mobile Communication Standard"

## Description

L'invention concerne la téléphonie sans fil.

La téléphonie sans fil permet à un abonné au service de téléphonie sans fil d'accéder à l'aide de son téléphone sans fil et par l'intermédiaire de bornes radio analogiques, au réseau public commuté.

Ces bornes permettent l'appel départ de l'abonné vers le réseau public ; elles assurent une authentification locale de l'abonné demandeur et gèrent la tarification des communications. L'abonné doit rester, pendant la durée d'une communication, dans le champ d'action de la borne par laquelle sa communication est établie, car s'il sort du champ d'action sa communication sera coupée, aucun suivi de l'abonné n'étant effectué. Un tel système de téléphonie sans fil présente les inconvénients suivants :
- l'authentification des abonnés demandeurs n'est pas assurée de façon sûre, d'où fraude possible. En effet chaque borne étant équipée de ses propres moyens d'authentification et de tarification, la multiplication de ces moyens est source de fraude, notamment en ce qui concerne l'authentification, car la mise à jour d'une liste noire n'est assurée que journellement dans le meilleur des cas,
- il n'y a pas de possibilité d'acheminer un appel arrivée vers un abonné au service de téléphonie sans fil, faute de savoir où il est,
- la taxation des communications devient complexe si le nombre d'opérateurs et le nombre de bornes sont importants,
- les types d'appels départ sont en nombre limité.

L'invention a pour but d'assurer de manière rigoureuse l'authentification du demandeur.

Un autre but de l'invention est de permettre d'acheminer un appel arrivé à un abonné au service de téléphonie sans fil.

Un autre but de invention est d'améliorer et de simplifier les fonctions de taxation.

L'invention a pour objet un réseau d'accès pour service de téléphonie sans fil comportant un réseau de distribution constitué par des bornes reliées par câble au réseau public commuté et des téléphones sans fil, numériques, chaque téléphone étant relié par radio à une même borne pendant toute la durée d'une communication;
et un réseau de points de commande de service ayant :
- des points de commande de service réseau ayant chacun une base de données des abonnés au service de téléphonie sans fil, pour un traitement en temps réel des fonctions suivantes : authentification des demandeurs, appels départ et établissement d'un ticket d'appel, chaque point de commande de service réseau étant relié au réseau public commuté;
- et un point de commande de service gestion chargé d'exploiter ladite base de données et d'effectuer une gestion commerciale du service de téléphonie sans fil, ladite gestion concernant un traitement des tickets d'appel;

caractérisé en ce que ledit réseau de points de commande de service a une architecture de réseau intelligent, architecture selon laquelle l'intelligence d'un nouveau service est concentrée dans des équipements dediés;
et en ce que chaque borne est reliée par canal de type 2B+D ou 30B+D au réseau public commuté, ledit réseau public étant un réseau à intégration de services.

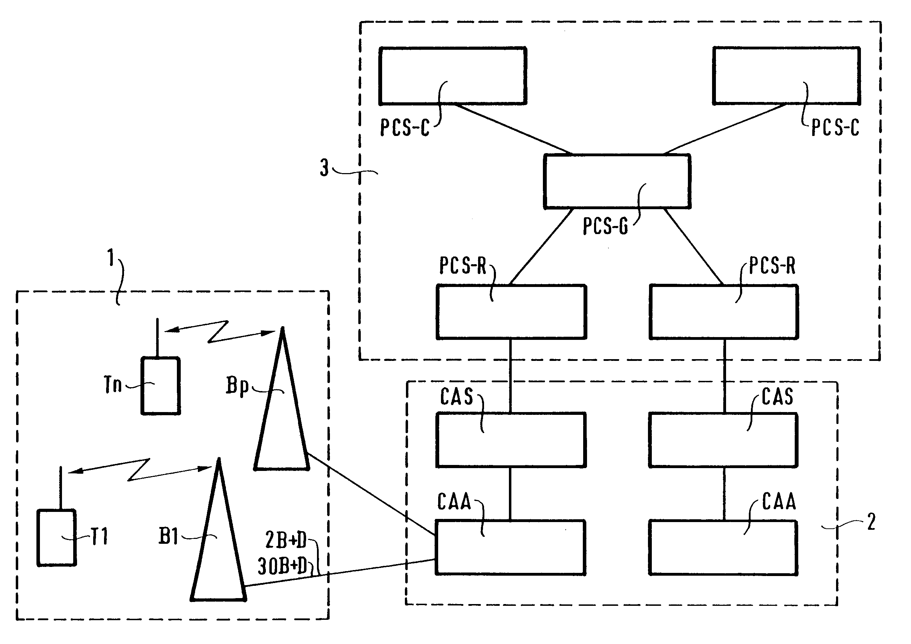

L'invention sera bien comprise par la description qui va suivre d'un exemple de réalisation illustré par la figure annexée qui représente le réseau d'accès pour service de téléphonie sans fil de l'invention.

Le réseau d'accès de l'invention met en oeuvre, pour le service de téléphonie sans fil, le concept de réseau intelligent, concept selon lequel l'intelligence d'un nouveau service est concentré dans des équipements dédiés, s'appuyant sur le réseau public commuté et les réseaux de signalisation CCITT N°7 et les réseaux de paquets X25. L'accès des équipements au réseau public se fait par l'intermédiaire d'interfaces capables de prendre en compte toutes les fonctions spécifiques aux services. On trouvera un exposé de ce concept dans l'article de J. DUNOGUE, JB. KERIHUEL et M.MARTIN : Du concept à l'application du réseau intelligent : Architecture et équipements d'ALCATEL. Revue Commutation et Transmission n° 2-1989.

Le réseau d'accès pour service de téléphonie sans fil comprend un réseau de distribution 1 et un réseau de points de commande de service 3.

Le réseau de distribution 1 comprend des téléphones sans fil, T1 à Tp, chaque borne pouvant être reliée simultanément à plusieurs téléphones sans fil, par exemple à 40 téléphones sans fil. Chaque borne B1 à Bp est reliée par câble au réseau public commuté 2, qui est un réseau numérique à intégration de services. Le réseau public est constitué par des centres à autonomie d'acheminement CAA et des commutateurs d'accès au service, CAS, reliés chacun à un centre à autonomie d'acheminement CAA. Chaque borne est reliée à un centre à autonomie d'acheminement par canal de type 2B+D ou30B+D.

Le réseau de points de commande de service 3 comprend des points de commande de service réseau PCS-R reliés chacun à travers le réseau N° 7 aux commutateurs d'accès au service CAS et un point de commande de service gestion PCS-G relié à chacun des points de commande de service réseau PCS-R via le réseau X25 ; le réseau de points de commande de service 3 peut également comporter des points de commande de service commercial, PCS-C, affectés chacun à un prestataire de service, dit opérateur du service de téléphonie sans fil, chaque opérateur gérant plusieurs bornes.

Chaque point de commande de service réseau, PCS-R est chargé des fonctions demandant un traitement en temps réel : authentification de l'abonné demandeur, appel départ, établissement d'un ticket d'appel pour la facturation de la communication ; ces fonctions ne sont donc plus assurées par les bornes, comme c'est le cas dans l'art antérieur. Pour l'authentification chaque point de commande de service réseau comporte une base de données des abonnés au service de téléphonie sans fil, ladite base contenant la liste de tous les abonnés au service de téléphonie sans fil, ladite liste pouvant être répartie dans plusieurs PCS-R, et une liste noire des abonnés. La mise à jour de la base de données est faite par le point de commande de service gestion PCS-G. Cette mise à jour est faite simultanément dans toutes les bases de données dès que le point de commande de service gestion PCS est informé d'une modification relative aux abonnés : nouvel abonné, suppression d'un abonné, et liste noire ; pour cela chaque opérateur dispose d'un terminal standard relié au point de commande de service gestion PCS-G. Les points de commande de service réseau, PCS-R, qui assurent le traitement d'appel départ, commandent les commutateurs d'accès au service, CAS, pour la durée de l'appel. Les points de commande de service réseau assurent également l'appel arrivée pour tout abonné localisé. Tout abonné désirant recevoir une communication effectue une demande de localisation ; la borne qui reçoit cette demande la transmet, via le réseau public, au point de commande de service réseau PCS-R qui la gère. Le point de commande de service réseau mémorise le numéro de la borne et celui de l'abonné qui est ainsi localisé, et envoie un signal pour informer l'abonné de sa localisation. Le point de commande de service réseau est ainsi capable de traiter un appel arrivée et de le transmettre à l'abonné demandé. Chaque point de commande de service réseau est donc également chargé du traitement en temps réel des fonctions de localisation et d'appel arrivée. Lorsqu'un appel arrivée arrive au point de commande de service réseau celui-ci commande le commutateur d'accès au service CAS, auquel il est relié pour établir la communication avec l'abonné demandé. Cette possibilité pour un abonné, de recevoir un appel n'existe pas dans l'art antérieur.

Les bornes du réseau de distribution de l'invention ne comportent donc que des moyens d'émission et de réception adaptés au réseau public commuté à intégration de services puisque chaque borne est reliée par un canal de type 2B+D ou 30B+D audit réseau public, les fonctions habituellement assurées par les bornes de l'art antérieur étant assurées par les points de commande de service-réseau PCS-R.

Le point de commande de service gestion PCS-G assure, en plus de la mise à jour des bases de données des points de commande de service réseau, la gestion technique desdits points de commande de service réseau ainsi que la gestion commerciale du service de téléphonie sans fil.
Pour s'adapter à un contexte multi-opérateurs, cette gestion commerciale peut être distribuée à des points de commande de service commercial, PCS-C, affectés chacun à un opérateur.

Le réseau d'accès de l'invention permet aux opérateurs d'offrir aux abonnés des compléments de services, comme par exemple facturation périodique (semaine, mois, etc...) ventilation de la facturation selon des critères donnés par l'abonné réacheminement de l'appel (occupation du demandé, date, heure...).

L'invention permet donc une meilleure sécurité de l'authentification d'un demandeur. Le regroupement dans les points de commande de service réseau, PCS-R des fonctions habituellement traitées par les bornes permet une simplification desdites bornes.

Tout ceci rend les fraudes beaucoup plus difficiles, et simplifie grandement l'exploitation des bornes, en supprimant les relevés de facturation et la mise à jour de la liste noire pour chaque borne. Par ailleurs le traitement automatique des tickets d'appel par le point de commande de service gestion PCS-G et sa distribution possible aux points de commande de service commercial PCS-C, s'ajoutant à la suppression des relevés de bornes entraîne une amélioration des problèmes de taxation et d'observation.

## Revendications

1. Réseau d'accès pour service de téléphonie sans fil, comportant un réseau de distribution (1) constitué par des bornes (B1 à Bp) reliées par câble au réseau public commuté (2), et des téléphones sans fil, (T1 à Tn) numériques, chaque téléphone étant relié par radio à une même borne pendant toute la durée d'une communication; et un réseau de points de commande de service (3) ayant :
- des points de commande de service réseau (PCS-R) ayant chacun une base de données des abonnés au service de téléphonie sans fil, pour un traitement en temps réel des fonctions suivantes : authentification des demandeurs, appels départ, et établissement d'un ticket d'appel; chaque point de commande de service réseau étant relié au réseau public commuté;
- et un point de commande de service gestion (PCS-G) chargé d'exploiter ladite base de données et d'effectuer une gestion commerciale du service de téléphonie sans fil, ladite gestion concernant un traitement des tickets d'appel;
caractérisé en ce que ledit réseau de points de commande de service a une architecture de réseau intelligent, architecture selon laquelle l'intelligence d'un nouveau service est concentrée dans des équipements dédiés;
et en ce que chaque borne est reliée par un canal de type 2B+D ou 30B+D au réseau public commuté (2), ledit réseau public étant un réseau à intégration de services.

2. Réseau d'accès selon la revendication 1, caractérisé par le fait que chaque point de commande de service réseau (PCS-R) assure également un traitement en temps réel des fonctions suivantes localisation d'abonné, et appel arrivée vers un abonné localisé, un abonné étant localisé sur sa demande effectuée à l'aide de son téléphone sans fil.

3. Réseau d'accès selon la revendication 1, caractérisé par le fait qu'il comporte également des points de commande de service commercial (PCS-C) affectés chacun à un opérateur des bornes du réseau de distribution et reliés au point de commande de service gestion (PCS-G) qui assure une distribution de la gestion commerciale.

## Patentansprüche

1. Zugangsnetz zum drahtlosen Telefondienst mit einem Verteilnetz (1), das aus über Kabel an das öffentliche Telefonnetz (2) angeschlossenen Funkkanalanschlüssen (B1 bis Bp) und aus digitalen Funktelefonen (T1 bis Tp) besteht, wobei jedes Telefon über Funk mit einem bestimmten Funkkanalanschluß während der ganzen Dauer eines Gesprächs verbunden ist, wobei weiter ein Dienst-Steuerpunktnetz (3) vorgesehen ist, das aufweist:
- Netz-Dienststeuerpunkte (PCS-R) mit je einer Datenbasis der Teilnehmer des drahtlosen Telefondienstes zur Bearbeitung der folgenden Aufgaben in Echtzeit: Authentifizierung der Anrufer, abgehende Anrufe und Erstellung eines Gesprächszettels, wobei jeder Netz-Dienststeuerpunkt an das öffentliche Telefonnetz angeschlossen ist,
- und einen Verwaltungs-Dienststeuerpunkt (PCS-G), der die Datenbasis verwerten soll und eine kommerzielle Verwaltung des drahtlosen Telefondienstes durchführen soll, wobei diese Verwaltung eine Bearbeitung der Gesprächszettel betrifft, dadurch gekennzeichnet, daß das Netz von Dienststeuerpunkten eine Architektur eines intelligenten Netzes besitzt, dergemäß die Intelligenz eines neuen Dienstes in spezifischen Einrichtungen konzentriert ist, und daß jeder Funkkanalanschluß über einen Kanal des Typs 2B+D oder 30B+D an das öffentliche Telefonnetz (2) angeschlossen ist, bei dem es sich um ein Netz vom ISDN-Typ handelt.

2. Zugangsnetz nach Anspruch 1, dadurch gekennzeichnet, daß jeder Netz-Dienststeuerpunkt (PCS-R) auch in Echtzeit die Bearbeitung der folgenden Aufgaben übernimmt: Lokalisierung eines Teilnehmers, ankommender Anruf für eine lokalisierten Teilnehmer, wobei ein Teilnehmer auf dessen Wunsch mit Hilfe seines drahtlosen Telefons lokalisiert wird.

3. Zugangsnetz nach Anspruch 1, dadurch gekennzeichnet, daß es weiter kommerzielle Dienststeuerpunkte (PCS-C) enthält, die je einem Funkkanalanschlußoperator des Verteilnetzes zugeordnet sind und mit dem Verwaltungs-Dienststeuerpunkt (PCS-G) verbunden sind, der eine Verteilung der kommerziellen Verwaltung gewährleistet.

## Claims

1. An access network for a cordless telephone service, the network comprising a distribution network (1) constituted by base stations (B1 to Bp) connected by cable to the public switched network (2), and digital cordless telephones (T1 to Tn), with each telephone being connected by radio to the same base station throughout the duration of a call; and a service control point network (3) having:
network service control points (PCS-R) each connected to the public switched network, and each having a data base of cordless telephone service subscribers for processing the following functions in real time: caller authentication; setting up calls; and establishing call-charging tickets; and
a managing service control point (PCS-G) controlling said data bases and providing commercial management for the cordless telephone service, said management relating to processing call-charging tickets;
the network being characterized in that said service control point network has the architecture of an intelligent network, in which architecture the intelligence of a new service is concentrated in dedicated equipment;
and in that each base station being connected to the public switched network (2) via a 2B+D or 30B+D type channel, said public network being an integrated services network.

2. An access network according to claim 1, characterized by the fact that each network service control point (PCS-R) also provides real time processing of the following functions: subscriber localization and routing of incoming calls to localized subscribers, with a subscriber being localized by making a localization request from the subscriber's cordless telephone.

3. An access network according to claim 1, characterized by the fact that it also includes commercial service control points (PCS-C) each associated with an operator of base stations in the distribution network and connected to the managing service control point (PCS-G) which serves to distribute commercial management to the commercial service control points.
